# EUROPÄISCHE PATENTSCHRIFT

(11) **EP 2 329 211 B1**
(45) Veröffentlichungstag und Bekanntmachung des Hinweises auf die Patenterteilung: **07.02.2018**
(21) Anmeldenummer: 08783483.4
(22) Anmeldetag: 16.09.2008
(51) Int. Cl.: F28D 1/06, F28D 7/00, F28D 7/10, F28D 9/00, F28D 21/00, F28F 9/22, F28F 21/08, E03F 1/00, F24D 17/00

(54) **INSTALLATION ZUR ENTNAHME VON WÄRME AUS FLIESSENDEM WASSER**
INSTALLATION FOR REMOVING HEAT FROM FLOWING WATER
INSTALLATION POUR EXTRAIRE DE LA CHALEUR D'EAU COURANTE

(43) Veröffentlichungstag der Anmeldung: 08.06.2011
(73) Patentinhaber: Tradspe, 78420 Carrières sur Seine (FR); Lyonnaise des Eaux France, 92040 Paris (FR)
(72) Erfinder: STUDER, Urs, CH-8049 Zürich (CH)
(74) Vertreter: Cabinet Armengaud Aîné
(86) Internationale Anmeldenummer: PCT/CH2008/000383
(87) Internationale Veröffentlichungsnummer: WO 2010/031193

(56) Entgegenhaltungen:
- EP-A- 1 215 460
- CA-A1- 2 583 161
- DE-A1- 3 607 207
- DE-A1- 4 202 791
- DE-A1- 19 719 311
- GB-A- 2 379 006
- US-A- 4 256 170
- US-A- 4 304 292
- US-A1- 2008 017 361
- DR.-ING. U. HEUBNER: "Handbuch Kompakt-Wärmeübertrager" 2005, PROF. EM. DIPL.-ING. H.-O.DEMSKI , ESSEN , XP002531246 Seite 168 - Seite 180

## Beschreibung

Die Erfindung betrifft eine Installation zur Entnahme von Wärme aus einer fliessenden Flüssigkeit, beispielsweise Abwasser oder einem Kühlwasser in einer Industrieanlage, oder zur Abgabe von Wärme an eine solche fliessende Flüssigkeit, mittels einem Wärmetauschmedium. Die an das Wärmetauschmedium übertragene Wärme wird diesem anschliessend durch eine Wärmepumpe entzogen und zur Heizung von Gebäuden, Aufbereitung von Warmwasser oder dergleichen genutzt (bzw. wird dem Wärmetauschmedium mit einer in die umgekehrte Richtung betriebenen Wärmepumpe die Wärme zugeführt, die anschliessend an die fliessende Flüssigkeit abgegeben wird, wobei dann die Wärmepumpe zum Kühlen von Gebäuden verwendet werden kann; unter Umständen kann eine Anlage je nach Betriebszustand beide Funktionen (kühlen/heizen) wahrnehmen).

Solche Installationen sind bspw. aus der europäischen Offenlegungsschrift 1 591 740 und aus der aus der deutschen Patentschrift 197 19 311 bekannt.

Die in diesen Schriften offenbarten Ansätze haben sich in vielen Situationen als wirtschaftlich erwiesen. Es gibt jedoch Anwendungen, bei denen der Installationsaufwand für die Wärmetauscher in einem Abwasserrohr zu gross ist und/oder bei denen der Wirkungsgrad zu klein ist. Ein Beispiel für eine solche Situation ist die Entnahme von Wärme aus in Druckrohren geführtem Abwasser (oder einer anderen, im Druckrohr geführten Flüssigkeit). Solche Druckrohre sind bspw. in Gebieten üblich, die vergleichsweise flach sind und kein genügendes Gefälle aufweisen. Weiter sind sie auch im Zusammenhang mit der Aufhebung/Zusammenlegung von Kläranlagen aufgekommen, aufgrund derer Abwasser vom Standort einer aufgehobenen Kläranlage zum Standort einer anderen Kläranlage höherer Kapazität geführt wird, was oft nur mittels Pumpen möglich ist. Eine weitere Anwendung von Druckrohren sind industrielle Anlagen die bspw. Kühlwasser benötigen.
Auch wenn solche speziellen Voraussetzungen nicht gegeben sind, ist es natürlich immer wünschenswert, wenn der Wirkungsgrad gross ist. Die deutsche Patentschrift DE 36 07 207 zeigt den Oberbegriff des Anspruchs 1, nämlich eine Installation zur Entnahme von Wärme aus einer in einem Rohr fliessenden Flüssigkeit und/oder zur Abgabe von Wärme an diese zur Verfügung gestellt, wobei die Installation mindestens einen Wärmetauscher mit mindestens einem ein zirkulierendes Wärmetauschmedium enthaltenden Gefäss sowie Zu- und Ableitungen für das Wärmetauschmedium von bzw. zu einer Wärmepumpe, wobei der mindestens eine Wärmetauscher so ausgestaltet ist, dass eine durch ihn gebildete Wärmetauschfläche das Rohrinnere umspannt und in direktem Kontakt mit der im Rohrinneren geführten Flüssigkeit ist.

Der Umstand, dass die Wärmetauschfläche das Rohr umspannt, bedeutet nicht, dass der Wärmetauscher entlang einer Umfangslinie des Rohr lückenlos vorhanden sein muss. Vielmehr bedeutet er, dass die Wärmetauschfläche sowohl im unteren wie auch im oberen Bereich vorhanden ist, also mehr als die Hälfte der Umfangslinie bedeckt. Etwas allgemeiner formuliert kann folgende Bedingung bestehen: in einem Wärmetauscherbereich erstreckt sich die Wärmetauschfläche beidseitig jeder die Schwerpunktachse enthaltenden Fläche. Bevorzugt nehmen in diesem Wärmetauscherbereich Wärmetauschfläche-freie Partien entlang der Umfangslinie bspw. in der Summe höchstens ca. 150°, höchstens 90° oder gar höchstens ca. 60° oder weniger ein, d.h. der gesamte von der Wärmetauschfläche bedeckte Azimutwinkelbereich beträgt vorzugsweise mindestens 210°, mindestens 270° oder mindestens 300°. Es ist folglich eine Aufgabe der Erfindung, eine Installation für die Entnahme von Wärme aus Abwasser oder einer Kühloder anderen Flüssigkeit (oder zur Abgabe von Wärme an diese) zur Verfügung zu stellen, die Nachteile des Standes der Technik überwindet, und die insbesondere Fortschritte im Bezug auf den Wirkungsgrad und die Installationskosten bringt, insbesondere im Hinblick auf spezielle Applikationen.

Gelöst wird diese Aufgabe durch eine Installation gemäß Anspruch 1, dadurch dass der Wärmetauscher eine Mehrzahl von Segmenten aufweist, die zueinander disjunkte Azimutwinkel-Bereiche überspannen. Bevorzugt weist der Wärmetauscher eine Mehrzahl von Segmenten auf, die je einen Azimutwinkel-Bereich überspannen und sich in axialer Richtung über eine gewisse Länge erstrecken, bspw. über 0.5 m bis 4m. Die Anzahl der gemeinsam das Rohrinnere umspannenden Segmente beträgt vorzugsweise zwischen 2 und 4, beispielsweise 3.
Das Vorsehen von mehreren, einen Azimutwinkel-Bereich überspannenden Segmenten ist insbesondere vorteilhaft in Bezug auf die Montage. Die Segmente können je für sich hergestellt und transportiert und vor Ort zum das Rohr umspannenden Wärmetauscher zusammengefügt und/oder an einem Trägerrohr montiert werden. Das Zusammenfügen der Segmente kann ein Verschweissen beinhalten.

Ebenfalls bevorzugt bildet eine Fläche des Wärmetauschers eine umlaufende Röhre, d.h. der Wärmetauscher selbst bildet ein Rohr.

Wird ein solches vom Wärmetauscher gebildetes Rohr aus einer Mehrzahl von Segmenten aufgebaut, so können diese entlang von axial verlaufenden Linien verschweisst oder eventuell verklebt oder verlötet oder sonstwie dichtend aneinandergefügt sein.

Ganz besonders bevorzugt ist dieses vom Wärmetauscher gebildete Rohr (nachfolgend "Wärmetauscherrohr" genannt) mechanisch so stabil, dass es das ganze Abwasserrorhr bildet, d.h. kein zusätzliches, den Wärmetauscher umgebendes Rohr ist nötig.

Dieser bevorzugte Ansatz hat zwei markante Vorteile: Erstens spart man sich das eigentliche Abwasserrohr, was die Herstellungskosten entscheidend senkt. Zweitens spart man sich auch die Montage des Wärmetauschers im Rohr - auch das ist vorteilhaft in Bezug auf die Kosten.

Der Wärmetauscher kann so ausgebildet sein, dass das Wärmetauscherrohr ein hier 'äusseres' Rohr genanntes Rohr bildet, d.h. das Wärmetauschmedium fliesst innerhalb des vom Wärmetauscher gebildeten Rohrs. Alternativ - besonders geeignet für dünne Rohre, insbesondere auch Rohre mit kleinen Querschnittsflächen - kann das Wärmetauscherrohr auch ein ,inneres Rohr' sein, so dass Wärmteauschermedium ausserhalb des Rohres fliesst. In diesem Fall ist die Wandstärke des Rohres bevorzugt nicht zu gross, damit der Wärmeübergang durch das Rohr hindurch genügend gut ist.

In Ausführungsformen, in denen das Wärmetauscherrohr relativ dünn ist, kann zur mechanischen Verstärkung noch ein Trägerrohr vorhanden sein, bspw. als Kuststoffrohr. Dadurch, dass der Wärmetauscher selbst auch ein umlaufendes Rohr bildet, ist keine Abdichtung zwischen dem Trägerrohr und dem Wärmetauscher notwendig, was in der Herstellung wirtschaftlicher und im Betrieb weniger heikel ist.

Die Installation gemäss dem ersten Aspekt der Erfindung weist ausserdem bevorzugt Versorgungsröhren zur parallelen Versorgung einer Mehrzahl von Wärmetauschereinheiten mit dem Wärmetauschmedium auf. Jede dieser Wärmetauschereinheiten weist einen mit der ersten Versorgungsröhre verbundenen Wärmetauschmedium-Einlass, einen mit der zweiten Versorgungsröhre verbundenen Wärmetauschmedium-Auslass und dazwischen einen Wärmetauschmediumpfad auf. Der Pfad kann bspw. durch Kanäle für das Wärmetauschmedium oder durch Schikanen oder dergleichen definiert sein und ist im Allgemeinen so ausgebildet, dass ein möglichst grosser Wärmeübertrag von der Flüssigkeit (Abwasser etc.) im Rohr auf das Wärmetauschmedium gewährleistet ist, d.h. der vom Wärmetauschmedium zurückzulegende Weg sollte einen möglichst grossen Bereich der Wärmetauschfläche abdecken.

Die Versorgungsröhren sind gemäss einer bevorzugten Ausführungsform oberhalb des Rohres angeordnet. Es hat sich nämlich gezeigt, dass die Entlüftung der Wärmetauscher ein wichtiges Thema sein kann, und die Entlüftung ist einfacher machbar wenn die Versorgungsröhren oberhalb der eigentlichen Wärmetauscher sind.

Die genannten, parallel versorgten Wärmetauschereinheiten können bspw. in gewissen Längenabschnitten den vorstehend bereits erwähnten Segmenten entsprechen.

Es ist also eine weiteres bevorzugtes Konzept der Erfindung, eine Installation zur Entnahme von Wärme aus einer in einem Rohr fliessenden Flüssigkeit (und/oder zur Abgabe von Wärme an eine solche) zur Verfügung zu stellen, die mehrere parallel mit Wärmetauschmedium versorgte Wärmetauschersegmente aufweist, welche unterschiedliche Azimutwinkelbereiche des Rohres umspannen, d.h. entlang einer Umfangslinie verteilt sind - dies im Gegensatz oder zusätzlich zur an sich bekannten parallelen Versorgung von in Rohrrichtung (axialer Richtung) hintereinander geschalteten Wärmetauschereinheiten.

In der Summe kann eine Installation gemäss bevorzugten Ausführungsformen der Erfindung aus einer Mehrzahl von Segmenten aufgebaut sein, von denen Gruppen von vorzugsweise 2-4 Segmenten zusammen einen (axialen) Bereich des Rohrs umspannen, wobei mehrere solcher Gruppen von Segmenten in axialer Richtung hintereinander geschaltet ist, und wobei jedes der Segmente parallel mit Wärmetauschmedium versorgt wird.

Dieser Ansatz ist insbesondere in Bezug auf die Montage besonders günstig, kann doch die Montage mit vorgefertigten Wärmetauschersegmenten erfolgen, die gruppenweise zu das Rohr umspannenden (axialen) Bereichen zusammengefügt bzw. am Trägerrohr montiert werden, wobei anschliessend mindestens ein weiterer solcher axialer Bereiche zusammengefügt/montiert und an den ersten axialen Bereich angefügt wird. Schliesslich werden alle Segmente an den Versorgungsröhren angeschlossen.

Ein zweiter Aspekt der Erfindung betrifft den Wärmeübergang an sich. Dieser zweite Aspekt ist unabhängig vom ersten Aspekt und auch anwendbar auf Wärmetauscherinstallationen, die keine das Rohr umspannende Struktur aufweisen, sondern die bspw. im Innern eines Abwasserrohres - meist aus Beton - verlegt werden, wie das bspw. in den Schriften DE 197 19 311 und EP 1 591 740 gelehrt wird.

Gemäss diesem zweiten Aspekt ist wird eine Installation zur Entnahme von Wärme aus einer in einem Rohr fliessenden Flüssigkeit und/oder zur Abgabe von Wärme an eine solche zur Verfügung gestellt, wobei die Installation mindestens einen Wärmetauscher mit mindestens einem ein zirkulierendes Wärmetauschmedium enthaltenden Gefäss sowie Zu- und Ableitungen für das Wärmetauschmedium von bzw. zu einer Wärmepumpe aufweist, wobei der Wärmetauscher mindestens zum Teil, bspw. mindestens im Bereich einer Wärmetauschfläche und vorzugsweise als Ganzes aus einem ferritischen Stahl gefertigt ist.

Es hat sich nämlich überraschend gezeigt, dass ferritische Stähle - sie waren aufgrund ihrer magnetischen Eigenschaften bisher vor allem für Kochtöpfe und Pfannen für Induktionsherde und dergleichen bekannt - sich sehr gut als Wärmetauschermaterialien für die Entnahme von Wärme aus Abwassern eignen. Bisher galten ferritische Stähle für Anwendungen wie die Vorliegende als ungeeignet, da sie als relativ weich und korrosionsanfällig angesehen wurden. Es hat sich jedoch gezeigt, dass insbesondere bei entsprechend genügend grossem Gehalt an Chrom und ggf. anderen Materialien wie Molybdän die Abrieb- und Korrosionsbeständigkeit trotz im Allgemeinen fehlendem oder geringem Gehalt an Nickel genügend gross ist, dass der ferritische Stahl auch für diese im Hinsicht auf die Korrosionseigenschaften sehr anspruchsvolle Anwendung geeignet sind. Ausserdem haben sich die Wärmeleiteigenschaften als sehr vorteilhaft erwiesen, und auch die Schweissbarkeit ist gut.

Besonders bevorzugt sind ferritische Stähle mit einem Chromgehalt von mindestens 12% oder mindestens 14%, beispielsweise zwischen 15% und 32% und besonders bevorzugt mit zusätzlich einem Molybdängehalt von mindestens 0.5% (beispielsweise zwischen 0.5% und 5%, insbesondere zwischen 0.5% und 2%.

Ein Beispiel für einen geeigneten ferritischen Stahl ist der Stahl 1.4521 (444) (Arcelor) mit 1%Si, 1%Mn, 17.5-19.5%Cr, 1.75-2.5% Mo und Spuren von C, N, Ti, P, Nb sowie maximal 1% Ni..

Die Verwendung von ferritischen Stählen - anstelle von austenitischen wie vom Stand der Technik her bekannt - für Wärmetauschersysteme zur Entnahme von Wärme aus Abwassern oder anderen möglicherweise korrosiven Flüssigkeiten ist besonders günstig in Kombination mit dem Ansatz den Wärmetauscher in direktem Kontakt mit dem Abwasser zu bringen. Ebenfalls günstig ist, aufgrund der guten Verschweissbarkeit, die Kombination mit dem Ansatz, den Wärmetauscher aus mehreren miteinander verschweissten Wärmetauscherelementen aufzubauen.

Im Folgenden werden Ausführungsbeispiele der Erfindung anhand von Figuren näher erläutert. In den Figuren bezeichnen gleiche Bezugszeichen gleiche oder analoge Elemente Es zeigen:
Fig. 1 eine Ansicht einer senkrecht zur Rohrachse geschnittenen Wärmetauscherinstallation, die ein Druckrohr bildet,
Fig. 2 schematisch eine Darstellung der abgewickelt dargestellten Struktur eines Wärmetauschers wie in Fig. 1 gezeigt,
Fig. 3 ebenfalls schematisch eine Installation mit mehreren in axialer Richtung hintereinander geschalteten Gruppen von Wärmetauschersegmenten, wobei jedes Segment parallel mit Hilfe von Versorgungsröhren mit Wärmetauscherflüssigkeit versorgt wird,
Fig. 4 eine zu Fig. 3 alternative Ausführungsform einer Wärmetauscherinstallation, und
Fig. 5 eine weitere alternative Ausführungsform.

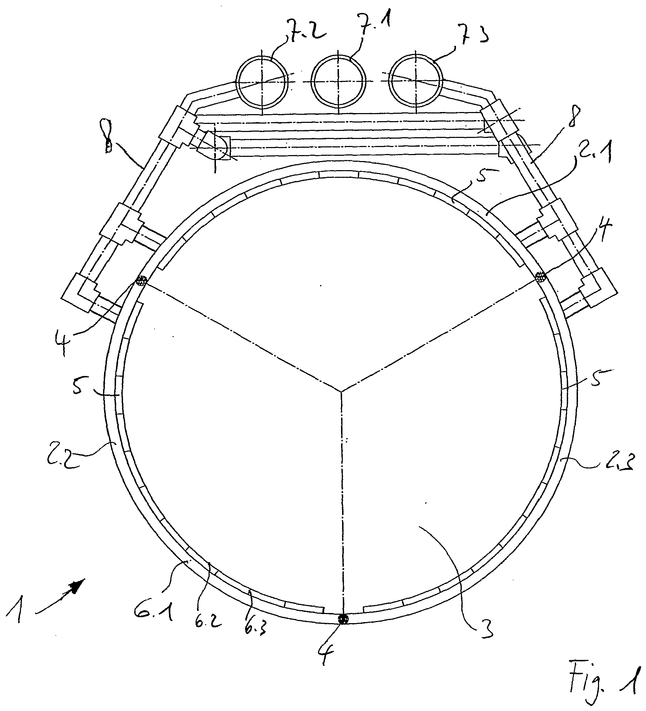

Die Wärmetauscherinstallation 1 gemäss **Figur 1** besitzt drei Wärmetauschersegmente 2.1, 2.2, 2.3 die gemeinsam ein Rohrinneres 3 umspannen. Die Segmente sind entlang axial verlaufenden Schweissnähten 4 verschweisst und bilden gemeinsam ein als Druckrohr fungierendes Wärmetauscherrohr. Im Betriebszustand ist das Rohrinnere 3 im Allgemeinen vollständig mit Flüssigkeit, bspw. mit Abwasser oder einem Kühlwasser oder irgendeiner Flüssigkeit gefüllt.

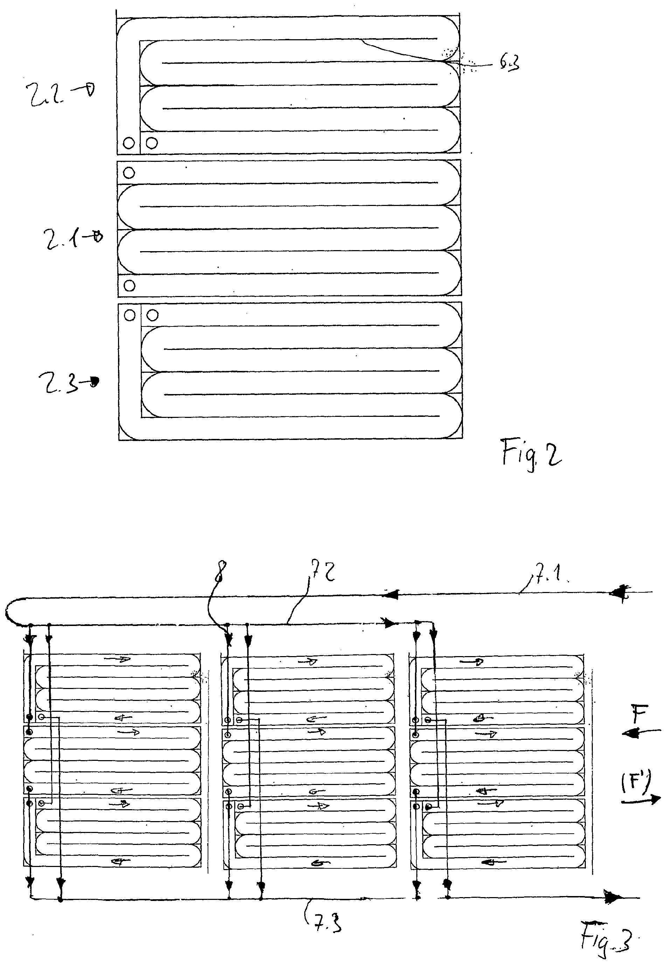

Im Inneren des Wärmetauscherrohres bilden die Wärmetauschersegmente 2.1, 2.2, 2.3 jeweils ein Gefäss 5, in dem das Wärmetauschmedium zirkuliert. Im vorliegenden Beispiel wird das Gefäss zwischen zwei parallelen Wärmetauscherplatten 6.1, 6.2 gebildet, von denen die äussere Platte 6.1 vorzugsweise eine grössere Materialstärke aufweist und die äusseren Platten 6.1 der Wärmetauschersegmente zusammen das Wärmetauscherrohr bildet. Aufgrund von als Schikanen fungierenden Stegen 6.3 bildet das Gefäss 5 eine Reihe von nebeneinander liegenden Kanälen, die vom Wärmetauschmedium der Reihe nach durchflossen werden, was nachstehend in Fig. 2 noch deutlicher dargestellt ist. Zur Versorgung mit dem Wärmetauchmedium sind Versorgungsröhren 7.1, 7.2, 7.3 vorhanden. Von der zuleitenden Versorgungsröhre 7.2 in die Gefasse 5 bzw. von den Gefässen zurück in die ableitende Versorgungsöhre 7.3 gelangt das Wärmetauschmedium über Zu- bzw. Ableitungen 8. In der Ansicht gemäss Fig. 1 sind jeweils zwei Zu- bzw. Ableitungen 8 unmittelbar hintereinander dargestellt, weshalb man in Fig. 1 nicht eindeutig erkennen kann, welche Zu- bzw. Ableitung 8 zu welchem Segment 2.1 führt. Ein Beispiel für eine sinnvolle entsprechende Anordnung wird jedoch nachstehend anhand von Fig. 3 beschrieben.

Das Material der Wärmetauschersegmente ist beispielsweise rostfreier Stahl, insbesondere ein rostfreier Stahl der vorstehend erwähnten ferritischen Art, oder auch ein austenitischer Stahl. Die Dicke der die Wärmetauschfläche bildenden inneren Platte 6.2 beträgt beispielsweise zwischen 1.5 mm und 5 mm, bevorzugt zwischen 2 mm und 4 mm, die Dicke der äusseren Platte 6.1 je nach Grösse des Rohrs und zu erreichender Druckfestigkeit zwischen 3 mm und 9 mm. Die Wanddicke der Stege 6.3 ist eher unkritisch, sie kann bspw. zwischen 1 mm und 4 mm betragen. Die äussere Platte, die innere Platte und die Stege sind bspw. aus demselben Material gefertigt, oder aus verschiedenen, aneinander befestigbaren Materialien.

In **Figur 2** sieht man schematisch die abgewickelt dargestellte Struktur eines Wärmetauschers gemäss Figur 1. Die in Fig. 2 äusseren Kanten entsprechen in der hier gewählten Darstellung der in Fig. 1 unten dargestellten Schweissnaht 4. Wie man sieht, sind die Stege 6.3 so angeordnet, dass sich in jedem Wärmetauschersegment ein mäanderartiger Pfad für das Wärmetauschmedium ergibt.

**Figur 3** zeigt eine Installation mit mehreren hintereinander geschalteten Gruppen von Wärmetauschersegmenten. Im gezeichneten Beispiel sind drei solche Gruppen gezeichnet, also total 9 Wärmetauschersegmente. Natürlich sind gemäss dem in Fig. 3 dargestellten auch Wännetauscherinstallationen mit mehr oder weniger Wärmetauschersegmenten realisierbar.

Die Versorgungsröhren 7.1, 7.2 und 7.3 sind nach dem an sich bekannten Tichelmann-System verlegt, das heisst die erste Versorgungsröhre 7.1 dient der Zuleitung des Wärmetauschmediums zum von der Wärmepumpe entferntesten Ort, und in den zu- und ableitenden Versorgungsröhren 7.2 und 7.3 fliesst das Wärmetauschmedium parallel (das Tichelmannsystem lässt sich analog auch genau umgekehrt realisieren).

Die Pfeile in Figur 3 bezeichnen die Flussrichtung des Wärmetauschmediums. Auch die Flussrichtung F des Abwassers (bzw. der anderen Flüssigkeit) ist eingezeichnet. Anstatt in die Richtung F kann die Flüssigkeit auch in die entgegengesetzte Richtung F' fliessen.

Wie man sieht, besteht aufgrund der drei das Rohrinnere umspannenden Wärmetauschersegmente die Notwendigkeit, dass sich mindestens eine Zu- und eine Ableitung überkreuzen. Das ist aufgrund der zur Verfügung stehenden Freiheitsgrade ohne Weiteres möglich. Im Prinzip wäre alternativ auch ein unterseitiges Durchführen einer Zu- oder Ableitung unter dem Rohr hindurch möglich, das wäre aber weniger günstig.

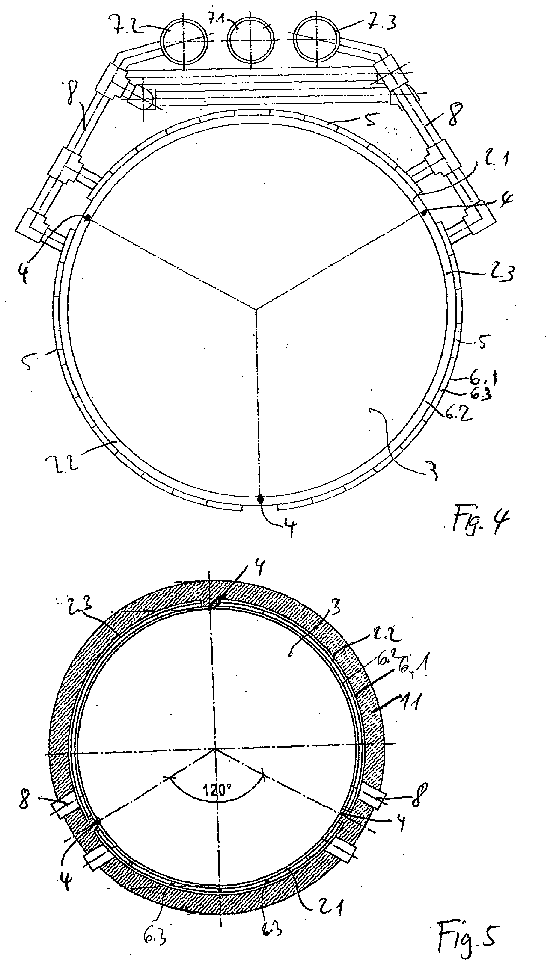

Die Ausführungsform gemäss **Figur 4** unterscheidet sich von derjenigen gemäss Figur 1 dadurch, dass das Wärmetauscherrohr von den inneren Wärmetauscherplatten 6.2 gebildet wird. Das Wärmetauschmedium zirkuliert demnach ausserhalb des Rohres. Diese Ausführungsform ist inbesondere dann günstig, wenn das Rohr als Ganzes einen eher geringen Durchmesser aufweist und die im Rohr zu erwartenden Drücke nicht sehr gross sind und daher die Rohr-Wandstärke nicht zu gross sein muss und bspw. 4 mm nicht überschreitet. Betreffend Ausgestaltung des Wärmtetauschmedium-Pfades gelten dieselben Ausführungen wie für die Version gemäss Figur 1.

Die Wärmetauschfläche wird von der inneren Platte 6.2 in denjenigen Bereichen gebildet, in denen diese in Kontakt mit dem Wärmetauschmedium ist.

Im Prinzip ist auch möglich, dass sowohl die inneren als auch die äusseren Wärmetauscherplatten 6.2, 6.1 der Wärmetauschersegmente je ein das Rohrinnere 3 umgebendes Rohr bilden.

**Figur 5** zeigt noch eine Ausführungsform, die ein aussenseitig am Wärmetauscher 2.1, 2.2, 2.3 verlaufendes Trägerrohr 11, beispielsweise aus Kunststoff aufweist. Dieses verleiht dem Rohr als Ganzem die notwendige mechanische Stabilität und dient zur besseren Einbindung. Auch in der Ausführungsform gemäss Figur 5 bilden die Wärmetauschersegmente 2.1, 2.2, 2.3 zusammen ein den Rohrinnenraum 3 umgebendes Rohr. In der gezeichneten Ausführungsform sind es die inneren Wärmetauscherplatten 6.2 der drei Segmente, die das Rohr bilden.

Die Ausführungsform gemäss Figur 5 könnte jedoch auch so gestaltet werden, dass die äusseren Wärmetauscherplatten 6.1 oder beide Wärmetauscherplatten 6.1, 6.2 das Rohr bilden.

Ausserdem könnte abweichend von der dargestellten Ausführungsform die Wärmetauscher auch so ins Trägerrohr 11 eingefügt sein, dass sie keine durchgehende Fläche bilden, wobei dann das Trägerrohr 11 bereichsweise in Kontakt mit der im Rohrinneren 3 geführten Flüssigkeit kommen würde.

Eine Wärmetauscherinstallation gemäss dem zweiten Aspekt der Erfindung kann gemäss dem ersten Aspekt ausgebildet sein, oder sie kann eine andere Ausgestaltung aufweisen, beispielsweise im Innern eines Abwasserrohres - meist aus Beton - verlegt sein, wie das bspw. in den Schriften DE 197 19 311 und EP 1 591 740 gelehrt wird.

Viele weitere Ausführungsformen beider Aspekte der Erfindung sind denkbar. Auch zusätzliche Funktionalitäten wie bspw. die in der EP 1 591 740 beschriebenen Mitteln zum Verhindern der Bildung einer Sielhaut können vorhanden sein.

## Patentansprüche

1. Installation (1) zur Entnahme von Wärme aus einer in einem Rohr fliessenden Flüssigkeit und/oder zur Abgabe von Wärme an eine in einem Rohr fliessende Flüssigkeit, wobei die Installation mindestens einen direkt in Kontakt mit der im Rohr fliessenden Flüssigkeit stehenden Wärmetauscher (2.1, 2.2, 1.3), mit mindestens einem ein zirkulierendes Wärmetauschmedium enthaltenden Gefäss (5) sowie Zu- und Ableitungen (8) für das Wärmetauschmedium von bzw. zu einer Wärmepumpe aufweist, wobei der mindestens eine Wärmetauscher so ausgestaltet ist, dass eine durch ihn gebildete Wärmetauschfläche ein Rohrinneres (3) des Rohres umspannt, **dadurch gekennzeichnet, dass** der Wärmetauscher eine Mehrzahl von Segmenten (2.1, 2.2, 2.3) aufweist, die zueinander disjunkte Azimutwinkel-Bereiche überspannen.

2. Installation nach Anspruch 1 **dadurch gekennzeichnet, dass** eine Fläche des Wärmetauschers ein umlaufendes, das Rohrinnere (3) umfassendes Rohr bildet, d. h. der Wärmetauscher selbst bildet ein Rohr.

3. Installation nach Anspruch 1 oder 2, **dadurch gekennzeichnet, dass** ein von einer Wärmetauschfläche eingenommener Azimutwinkelbereich mindestens 270° einnimmt.

4. Installation nach Anspruch 1, **dadurch gekennzeichnet, dass** jedes der Segmente je eine Zu- und Ableitung (8) aufweist, derart, dass die Segmente parallel mit dem Wärmetauschmedium versorgbar sind.

5. Installation nach Anspruch 2, **dadurch gekennzeichnet, dass** das vom Wärmetauscher gebildete Rohr mechanisch so stabil ist, dass es das ganze Abwasserrohr bildet, und dass die Installation frei von einem den Wärmetauscher umgebenen Rohr ist.

6. Installation nach Anspruch 2 oder 5, **dadurch gekennzeichnet, dass** das Gefäss (5) innerhalb des vom Wärmetauscher gebildeten Rohrs angeordnet ist.

7. Installation nach Anspruch 2 oder 5, **dadurch gekennzeichnet, dass** das Gefäss (5) ausserhalb des vom Wärmetauscher gebildeten Rohrs angeordnet ist.

8. Installation nach einem der vorangehenden Ansprüche, **gekennzeichnet durch** Versorgungsröhren (7.1, 7.2, 7.3) zur parallelen Versorgung einer Mehrzahl von Wärmetauschereinheiten mit dem Wärmetauschmedium.

9. Installation nach den Ansprüchen 4 und 8, **dadurch gekennzeichnet, dass** die Wärmetauschereinheiten den Wärmetauschersegmenten (2.1, 2.2, 2.3) entsprechen.

10. Installation nach Anspruch 9, **dadurch gekennzeichnet, dass** mehrere, bezüglich einer axialen Richtung des Rohrs hintereinander geschaltete Gruppen von Wärmetauschersegmenten vorhanden sind, wobei jedes Wärmetauschersegment parallel mit dem Wärmetauschmedium versorgbar ist.

11. Installation nach einem der Ansprüche 8-10, **dadurch gekennzeichnet, dass** die Versorgungsröhren oberhalb des Rohres verlaufen.

12. Installation nach einem der vorangehenden Ansprüche, **dadurch gekennzeichnet, dass** der mindestens eine Wärmetauscher mindestens teilweise aus einem ferritischen Stahl gefertigt ist.

13. Installation nach Anspruch 12, **dadurch gekennzeichnet, dass** der Wärmetauscher mindestens im Bereich der Wärmetauschfläche und vorzugsweise der Wärmetauscher als Ganzes aus ferritischem Stahl besteht.

14. Installation nach Anspruch 12 oder 13, **dadurch gekennzeichnet, dass** der ferritische Stahl einen Chromgehalt von mindestens 12% aufweist.

## Claims

1. Installation (1) for removing heat from a fluid flowing in a pipe and/or supplying heat to a fluid flowing in a pipe, wherein the installation comprises at least one heat exchanger (2.1, 2.2, 1.3) in direct contact with the fluid flowing in the pipe, with at least one vessel (5) containing a circulating heat-exchange medium, as well as inlet and outlet lines (8) for the heat-exchange medium from and to a heat pump, and in which at least one heat exchanger is designed in such a way that a heat-exchange surface forms a circumferential pipe which comprises the pipe interior (3), and **characterised in that** the heat exchanger has a number of segments (2.1, 2.2, 2.3) which span azimuth angle ranges that are disjointed in relation to one another.

2. Installation, according to claim 1, **characterised in that** a surface of the heat exchanger forms a circumferential pipe which comprises the pipe interior (3), i.e. the heat exchanger itself forms a pipe.

3. Installation, according to claim 1 or 2, **characterised in that** an azimuth angle range covered by a heat-exchange surface is of at least 270°.

4. Installation, according to claim 1, **characterised in that** each of the segments has an inlet and outlet line (8) designed in such a way that the segments can be supplied in parallel with the heat-exchange medium.

5. Installation, according to claim 2, **characterised in that** the pipe formed by the heat exchanger is so mechanically stable that it forms the entire wastewater pipe, and **in that** the installation is free of a pipe surrounding the heat exchanger.

6. Installation, according to claim 2 or 5, **characterised in that** the vessel (5) is arranged inside the pipe formed by the heat exchanger.

7. Installation, according to claim 2 or 5, **characterised in that** the vessel (5) is arranged outside the pipe formed by the heat exchanger.

8. Installation, according to one of the preceding claims, **characterised by** supply pipes (7.1, 7.2, 7.3) allowing several heat-exchanger units to be supplied in parallel with the heat-exchange medium.

9. Installation, according to claims 4 and 8, **characterised in that** the heat-exchanger units correspond to the heat-exchanger segments (2.1, 2.2, 2.3).

10. Installation, according to claim 9, **characterised in that** there are several groups of heat-exchanger segments connected in series with respect to an axial direction of the pipe, and in which each heat-exchanger segment can be supplied in parallel with the heat-exchange medium.

11. Installation, according to one of claims 8-10, **characterised in that** the supply pipes run above the pipe.

12. Installation, according to one of the preceding claims, **characterised in that** at least one heat exchanger is produced, at least in part, using a ferritic steel.

13. Installation, according to claim 12, **characterised in that** the heat exchanger consists of ferritic steel, at least around the heat-exchange surface, and preferably for the heat exchanger as a whole.

14. Installation, according to claim 12 or 13, **characterised in that** the ferritic steel has a chromium content of at least 12%.

## Revendications

1. Installation (1) destinée à enlever de la chaleur à partir d'un liquide s'écoulant dans un tube et/ou distribuer de la chaleur à un liquide s'écoulant dans un tube, l'installation présentant au moins un échangeur de chaleur (2.1, 2.2, 1.3) qui est en contact direct avec le liquide s'coulant dans le tube, avec au moins un récipient (5) contenant un fluide d'échange de chaleur en circulation ainsi que des conduites d'amenée et d'évacuation (8) pour le fluide d'échange de chaleur vers ou respectivement à partir d'une pompe à chaleur,
l'échangeur de chaleur au moins au nombre de un étant constitué de telle sorte qu'une surface d'échange de chaleur formée par lui enserre un intérieur de tube (3) du tube, **caractérisée en ce que**
l'échangeur de chaleur présente une pluralité de segments (2.1, 2.2, 2.3) qui enjambent des plages d'angle d'azimut disjointes les unes des autres.

2. Installation selon la revendication 1,
**caractérisée en ce qu'**une surface de l'échangeur de chaleur forme un tube périphérique englobant l'intérieur du tube (3), ce qui signifie que l'échangeur de chaleur lui-même forme un tube.

3. Installation selon la revendication 1 ou 2,
**caractérisée en ce qu'**une plage d'angle d'azimut occupée par une surface d'échange de chaleur occupe au moins 270°.

4. Installation selon la revendication 1,
**caractérisée en ce que** chacun des segments présente respectivement une amenée et une évacuation (8) de telle sorte que les segments peuvent être alimentés en parallèle avec le fluide d'échange de chaleur.

5. Installation selon la revendication 2,
**caractérisée en ce que** le tube formé par l'échangeur de chaleur est mécaniquement stable de telle sorte qu'il forme la totalité du tube d'évacuation d'eau, et **en ce que** l'installation est dépourvue de tube entourant l'échangeur de chaleur.

6. Installation selon la revendication 2 ou 5,
**caractérisée en ce que** le récipient (5) est disposé à l'intérieur du tube formé par l'échangeur de chaleur.

7. Installation selon la revendication 2 ou 5,
**caractérisée en ce que** le récipient (5) est disposé à l'extérieur du tube formé par l'échangeur de chaleur.

8. Installation selon l'une des revendications précédentes, **caractérisée par** des tubes d'alimentation (7.1, 7.2, 7.3) destinés à l'alimentation en parallèle d'une pluralité d'unités d'échangeur de chaleur avec le fluide d'échange de chaleur.

9. Installation selon les revendications 4 et 8,
**caractérisée en ce que** les unités d'échangeur de chaleur correspondent aux segments d'échangeur de chaleur (2.1, 2.2, 2.3).

10. Installation selon la revendication 9,
**caractérisée par** la présence de plusieurs groupes de segments d'échangeur de chaleur montés les uns derrière les autres par rapport à une direction axiale du tube, chaque segment d'échangeur de chaleur pouvant être alimenté en parallèle avec le fluide d'échange de chaleur.

11. Installation selon l'une des revendications 8-10, **caractérisée en ce que** les tubes d'alimentation s'étendent au-dessus du tube.

12. Installation selon l'une des revendications précédentes,
**caractérisée en ce que** l'échangeur de chaleur au moins au nombre de un est fabriqué au moins partiellement en acier ferritique.

13. Installation selon la revendication 12,
**caractérisée en ce que** l'échangeur de chaleur, au moins dans la zone de la surface d'échange de chaleur, et de préférence l'échangeur de chaleur dans son ensemble se compose d'acier ferritique.

14. Installation selon la revendication 12 ou 13,
**caractérisée en ce que** l'acier ferritique présente une teneur en chrome d'au moins 12 %.
